(19) **Europäisches Patentamt / European Patent Office / Office européen des brevets**

(11) **EP 3 036 204 B1**

(12) **EUROPEAN PATENT SPECIFICATION**

(45) Date of publication and mention
of the grant of the patent:
**04.07.2018  Bulletin 2018/27**

(51) Int Cl.:
**C03C 17/06** $^{(2006.01)}$          **H05B 3/84** $^{(2006.01)}$

(21) Application number: **14837920.9**

(22) Date of filing: **05.08.2014**

(86) International application number:
**PCT/RU2014/000585**

(87) International publication number:
**WO 2015/026266 (26.02.2015 Gazette 2015/08)**

(54) **GLASS PRODUCT WITH ELECTRICALLY HEATED SURFACE AND METHOD OF ITS MANUFACTURE**

GLASPRODUKT MIT ELEKTRISCH BEHEIZBARER OBERFLÄCHE UND VERFAHREN ZU DESSEN HERSTELLUNG

PRODUIT EN VERRE AYANT UNE SURFACE CHAUFFÉE ÉLECTRIQUEMENT ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2013  RU 2013139381**

(43) Date of publication of application:
**29.06.2016  Bulletin 2016/26**

(73) Proprietor: **"Lascom" Ltd.**
**g. Dubna, Moskovskaya obl. 141983 (RU)**

(72) Inventors:
• **CHADIN, Valentin Sergeevich**
**Noginsky raion**
**pos. Obukhovo, 142440 (RU)**

• **ALIEV, Timur Alekperovich**
**g. Noginsk, 142407 (RU)**

(74) Representative: **Grosse, Wolf-Dietrich Rüdiger**
**Gihske Grosse Klüppel Kross**
**Bürogemeinschaft von Patentanwälten**
**Hammerstrasse 3**
**57072 Siegen (DE)**

(56) References cited:
| | |
|---|---|
| EP-A1- 0 728 711 | EP-A1- 2 431 669 |
| EP-A2- 2 381 739 | EP-B1- 2 274 251 |
| DE-A1- 3 708 577 | EA-A1- 201 000 722 |
| GB-A- 2 091 528 | SU-A1- 812 778 |

**Description**

Technical Field

The present invention relates, in particular, to a glass product with electrically heated surface and a method of its manufacture, and can be used in various industries, which provide for the use of such glasses.

Background Art

Metallization of glass surface is widely used in various fields. An example of such glass is K-glass, which is a high-quality glass having a low-emissivity coating applied to one surface of the glass during its manufacture. Molecules of the metallized coating penetrate deep into the crystal lattice of glass, which makes it very stable, extremely mechanically strong and permanent. Coating obtained using this technology is referred to as "hard" coating.

Glass with low-emissivity coating is also known to be used for the manufacture of glass products with electrically heated surface.

In particular, a glass product with electrically heated surface is disclosed in GB 1051777 A. The technical solution is aimed at heating a glass having a non-rectangular shape, which is accomplished by providing a plurality of individual sections in an electroconductive layer, the sections being connected in groups of successive sections, which groups are connected in parallel in electric circuit.

However this solution has limited application since the division of surface into paired sections allows the attainment of the aim only in a glass product with uniformly changing shape, such as trapezoidal. Furthermore, the need to provide multiple connections between sections complicates the structure as a whole. Also, this solution does not allow heating glass with specified conditions of heating.

In EA 201000722 A1 another glass product is described. According to this solution the glass product with electrically heated surface comprises a substantially transparent substrate and a substantially transparent electroconductive layer applied to the substrate, wherein the electroconductive layer comprises one or more sections with a specified surface resistance increased relative to the total surface resistance of the electroconductive layer. In this application, sections with increased surface resistance are formed by figures applied as fragments of lines having predetermined configuration at an angle to each other in a predetermined sequence over the entire surface of glass. The figures are positioned with a predetermined pitch and have the same dimensions within one section of the electrically heated surface.

Disadvantages of this solution include the appearance of heat emission concentration zones at the ends of the line fragments, which is a significant problem, and the fact that due to uncertain shape of the figures formed by angled lines the "pitches" of these figures cannot be accurately aligned in adjacent sections with different surface resistance, this resulting in appearance, between these areas, of zones whose resistance cannot be calculated.

Other disadvantages include the difficulty of calculating dimensions and configurations of the figures to provide the desired surface resistance and, accordingly, the technical complexity of this solution, in particular, the complexity of applying the line fragments.

Yet another solution is disclosed in document EP 2381739 A2 that teaches a heat emitting body including a transparent substrate, and a conductive heat emitting pattern having a boundary line shape of figures forming a Voronoi diagram. However this solution is not directed to the problems of heating a surface of a glass product having non-rectangular geometry.

The most relevant prior art is described in application GB 2091528 A. This solution relates to an electrically heatable transparent panel comprising a transparent electroconductive layer (enamel) deposited meshwise on a substrate of glazing material. The electroconductive layer is formed with at least two adjacent sections extending in the longitudinal direction, and each section has electrically insulated zones in the form of regular hexagons forming a honeycomb structure, having the same dimensions within one section and positioned with the same distance there between throughout the electroconductive layer, wherein the electrically insulated zones in each section are separated by electroconductive strips having substantially the same width w within one section.

However basic disadvantage of this prior art is also that it does not provide any solution of said problems of heating a surface of a glass product having non-rectangular geometry.

Summary of the invention

The object of the present invention is to overcome the disadvantages of prior art. More specifically, the object is to provide uniform distribution of power of heating elements over the entire surface of a glass product having a predetermined configuration, and to create sections, which provide heating with specified characteristics.

According to the invention there is provided a method of manufacturing a glass product with electrically heated surface, comprising the steps of:

providing a substantially transparent substrate;

applying a substantially transparent electroconductive layer to the substrate; and

forming in the electroconductive layer at least one section with electrically insulated zones separated by electroconductive strips, which at least partially deviate from the longitudinal direction of the section and consist of straight and/or curved portions having within one section substantially the same width $w$, which is selected for a specified configuration of electrically insulated zones as a function of desired total resistance $R_{total}$ of the section, consisting of a combination of resistances $R_N$ of said strip portions, wherein resistance $R_N$ of each strip portion is determined from the equation:

$$R_N = \frac{R_\square \cdot l_N}{w}$$

where $R_\square$ is the specific resistivity of the electroconductive layer;

$w$ is the width of the strip, and

$l._v$ is the length of each portion of the strip.

Preferably, curvature of the curved portions is varied in accordance with a specified function.

According to another aspect of the invention there is provided a glass product with electrically heated surface, comprising:

a substantially transparent substrate; and

a substantially transparent electroconductive layer applied to the substrate and containing at least one section with electrically insulated zones having the shape of regular hexagons forming a honeycomb structure and separated by electroconductive strips having substantially the same width within one section, said regular hexagons having the same dimensions within one section and positioned with the same distance between centers of circles circumscribed around them all over the electroconductive layer, wherein specified radius $r_{sp}$ of the circles within one section is calculated by the formula:

$$r_{sp} = r_{max} - r_{max} \cdot R_{in} / R_n,$$

where

$r_{max}$ is the maximum radius of the circle for the basic honeycomb structure with adjoining regular hexagons;

$R_n$ is the specified surface resistance of the section, and

$R_{in}$ is the surface resistance of the initial section without electrically insulated zones.

Preferably, bus bars are formed along edges of the glass product at a distance from each other.

The electrically insulated zones may comprise an electroconductive layer inside them.

According to the Wiktionary, "strip" as a long narrow area on a surface or in space, distinguished by something from its surroundings.

"Surface resistance" is the electrical resistance of a surface area between two electrodes that are in contact with the material. Surface resistance is also the ratio of voltage of current applied to the electrodes to the portion of current there between, which flows in upper layers of the composite.

"Honeycomb structure" commonly refers to a structure resembling a honeycomb. It is common knowledge that a regular hexagon is the ideal figure to construct a honeycomb structure.

The technical effect provided by the above combination of features includes primarily the absence of heat emission concentration zones, as well as the almost complete absence of a temperature gradient.

Furthermore, formation of electrically insulated zones is much simpler, especially where it is necessary to use variable surface resistance over the heated area. This effect is provided by the alignment of pitch of electrically insulated zones of the used structure in at least two adjacent sections of the electrically heated surface.

Also, the invention ensures rapid formation of different layouts with electrically insulated zones having different resistance magnification factors and a smaller variation step of the resistance magnification factors.

Usefulness of the invention is also in that it provides a method of forming electrically insulated zones, which is more efficient and highly adaptable to streamlined production.

Brief Description of the Drawings

Other objects and advantages of the invention will become apparent from the following detailed description of preferred embodiments thereof, given with reference to the accompanying drawings, wherein:

Fig.1 is a schematic view of a glass product with an electroconductive layer comprising electrically insulated zones;
Fig.2 to Fig.5 show layouts of bus bars in accordance with computation schemes for resistance of the electroconductive layer;
Fig.6 is a fragment of a structure according to the invention having electrically insulated zones in the shape of octagons and squares;
Fig.7 is a fragment of a structure according to the invention having electrically insulated zones in the shape of circles and four-beam stars;
Fig.8 is a fragment of a basic honeycomb structure with adjoining regular hexagons, which shows elementary rectangles;
Fig.9 is a fragment of the basic honeycomb structure according to Fig.8, in which regular hexagons are separated by electroconductive strips;
Fig.10 to Fig.12 are diagrams showing connection of resistances of strips of different structures according to the invention;
Fig.13 is a schematic view of a glass product with an electroconductive layer comprising a plurality of sections with electrically insulated zones.

Description of Preferred Embodiments

The following description of preferred embodiments of the present invention is illustrative only and not intended in any way to limit the scope of the invention defined in the appended claims.

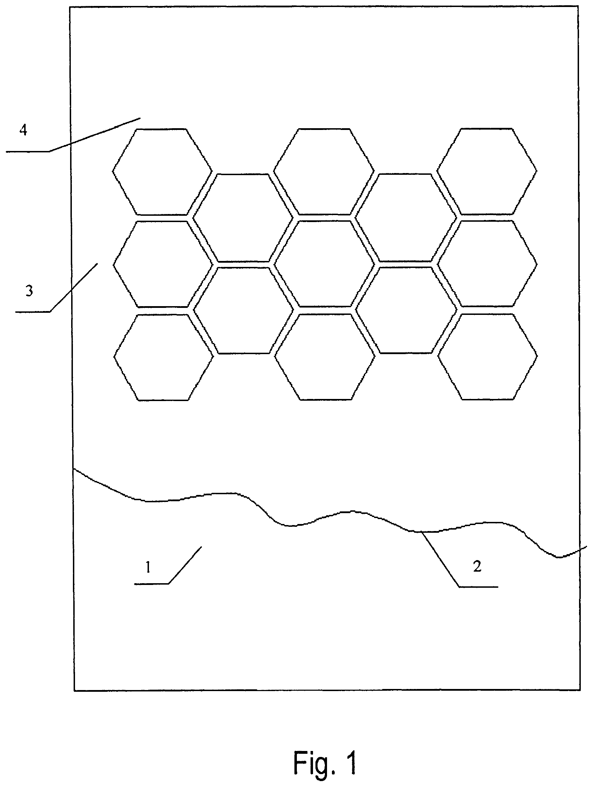

Fig.1 schematically shows a glass product 1, which comprises a substantially transparent electroconductive layer 3 applied to a substrate 2, where the electroconductive layer comprises one section consisting of electrically insulated zones 4 in the shape of regular hexagons forming a honeycomb structure. This layout of electrically insulated zones is currently considered to be the most preferred.
Described below is an approximate computation scheme for applying electrically insulated zones on the electroconductive coating of glass (e.g. ship's porthole glass) with predetermined specific heating power and applied voltage.
As an example, 6 mm thick glass with an electroconductive layer (aforementioned K-glass with "hard" coating) may be used, whose coating has specific surface resistivity R□ = 16-19 ohm□. At the same time, specified specific heating power is $W_{sp}$ = 7-9 watts/sq dm, and specified applied voltage is $U_{ap}$ = 220V, 50Hz. Heating power should be uniform over the entire surface of the electrically heated glass. Permissible difference in surface temperatures of the electrically heated glass should be within 1-6°C.
Glass with electrically heated surface comprises an electroconductive layer with surface area $S_n$ = 66 sq dm (size 6 × 11 dm), specific resistivity $R_□$ = 17 ohm/□, and bus bar width 10 mm.
Dissipated power (W, watts) of initial electroconductive layer can be calculated by the formula:

$$W = W_{sp} \cdot S_n,$$

where W is in the range:

$W_{min} = W_{sp\,min} \cdot S_n = 7 \cdot 66 = 462$ watts;
$W_{max} = W_{sp\,max} \cdot S_n = 9 \cdot 66 = 594$ watts.

Voltage drop per 1 sq dm of the electroconductive layer of the glass is calculated by the formula:

$$W = V^2/R \, ,$$

from which $V^2 = W \cdot R_□$;

$$V_{max} = \sqrt{7 \cdot 17} = 10.9V;$$

$$V_{max} = \sqrt{7 \cdot 17} = 12.37V.$$

In this case, the length of current path over the surface of electrically heated glass at applied voltage $U_{ap} = 220$ V is:

$$L = U_{ap}/V,$$

where

$L_{max} = U_{ap}/V_{min} = 220/10.9 = 2018$ mm;
$L_{max} = U_{ap}/V_{max} = 220/12.73 = 1778$ mm.

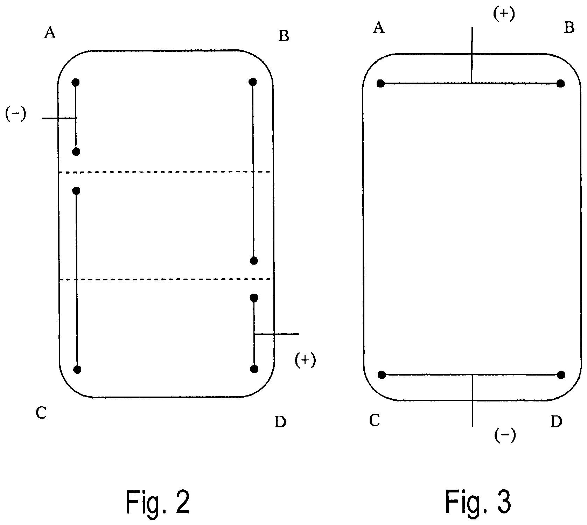

The predetermined characteristics of electrical heating can be achieved by dividing the surface of the electroconductive layer by straight lines on sides AC and BD into three equal sections (Fig.2) and by treating the electroconductive layer material with laser radiation to completely remove the coating on these lines to a width from 0.05 mm to several millimeters depending on operating conditions. By successively connecting the three electrically insulated sections we obtain the electroconductive length:

$$(L_{AB} - 2 \cdot \delta_{bus}) \times 3 = (600 - 2 \times 10) = 1740 \text{ mm,}$$

where

$L_{AB}$ - length of AB side, $\delta$ - width of the bus bar.

The resulting current path length is close to the calculated one; therefore it will observe the conditions for implementation of the predetermined heating characteristics and provide uniform heating. Currently, this is a standard layout employed in electrically heated glasses, the only difference is in the method of removing the coating - the coating material can be treated by laser radiation, etching, and electrochemically. It should be noted that in terms of geometry and width of the resulting electrically insulated lines, completeness of removal of the coating material and improvement of optical characteristics of the glass, the width of each electrically insulated line is preferably not more than 0.035 mm.

The present invention solves the aforementioned object owing to the electrically insulated zones formed in the electroconductive layer in the shape of regular hexagons forming a honeycomb structure, which are arranged with equal distances between centers of circles circumscribed around them and having the same dimensions at least on one portion of the electrically heated surface.

In this case, a structure with electrically insulated zones having specified parameters should be used to allow three-fold increase in the total average specific surface resistivity of the electrically heated layer. The following calculation will explain this.

To provide the total dissipated power at 220 V voltage applied to glass within the 426-594 watts (calculated by the formula above), the total surface resistance of the electroconductive layer should be in the range:

$$R_{in} = V^2/W_{in};$$

$R_{in\ min} = 220^2/594 = 81.5$ ohm;
$R_{in\ max} = 220^2/462 = 104.8$ ohms;
$R_{in\ av} = (81.5 + 104.8)/2 = 93.15$ ohms.

If bus bars are laid along short sides AB and CD (Fig.3), the initial surface resistance of the electroconductive layer is:

$$R_{in\ surf} = [R_{\square} \cdot (L_{CD} - 2 \cdot \delta_w)/L_{AB}] = [17 \cdot (1120 - 2 \cdot 10)/600] = 31 \text{ ohms.}$$

It is clear that to obtain predetermined heating conditions at specific heating power $W_{sp} = 7\text{-}9$ watts/sq dm, the total surface resistance should be increased 3 times - $R_{in\ av}/R_{in\ surf} = 93.5/31 = 3$. Let's call it magnification factor K = 3.

For this factor the honeycomb structure can be calculated based on the above equation:

$$r_{sp} = r_{max} - \frac{r_{max} \cdot R_{in}}{R_{sp}}$$

Therefore, $r_{sp}$ can be calculated based on selected initial dimensions of a basic honeycomb structure with adjoining regular hexagons having a maximum radius of the circumscribed circle, and dimensions of inscribed regular hexagons of the obtained honeycomb structure can be determined.

The resulting honeycomb structure is applied by any conventional method on the electroconductive layer of glass and the desired resistance and desired heating power are obtained, which provide, in turn, uniform heating and permissible temperature gradient.

In this example, dimensions and geometry of glass and specified heating conditions ($W_{sp}$) can solve the task by the traditional method, but there are tasks (for glass with specific geometric shape and size) when the use of the traditional method (zones formed by straight lines) is impossible. Explain this by the following example.

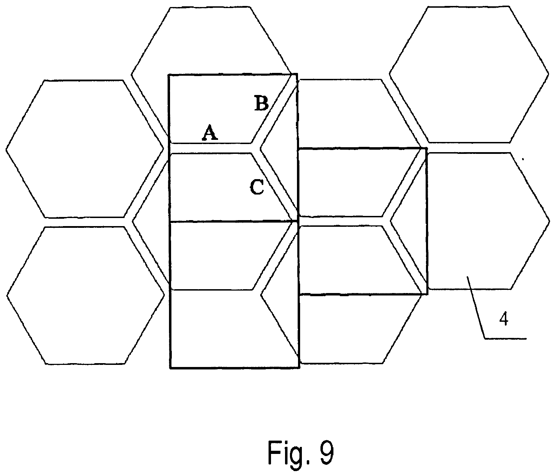

In the example below, the task is to heat the ship's porthole glass shown schematically in Fig.9. In this case, fitting the glass coating resistance by the traditional method is not possible because when the glass surface is divided into two parts by even a single straight engraved line, the surface resistance increases fourfold; this can be analyzed with the above formulas - it can be seen that the heating power will be unacceptably small to observe the specified heating conditions. The task can be solved using the inventive layouts of electroconductive areas in electrically heated surface.

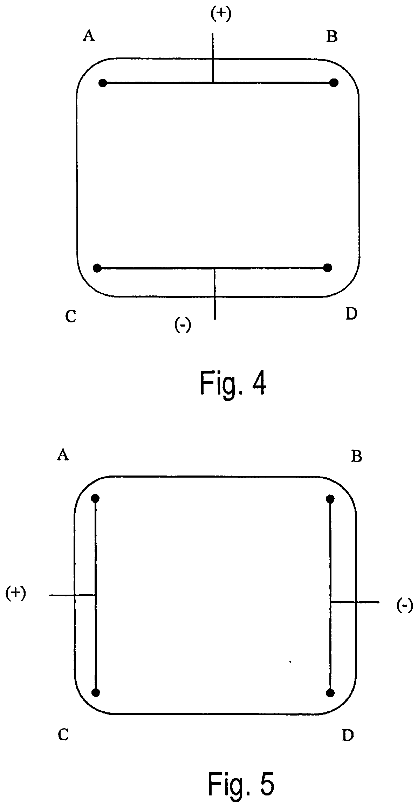

Depending on the design feasibility, bus bars may be positioned along sides AB and CD (Fig.4), and then the resistance can be increased threefold by adjusting with cutoffs having the required value and applied according to the exemplary layout (Fig.2). If the bus bars are positioned on sides AC and BD (Fig.5) on the basis of design considerations, the resistance of the glass surface should be increased by 2.4 times to achieve the specified heating conditions, i.e. the layout of electrically insulated zones calculated for magnification factor K = 2.41 should be applied.

Explain this by calculations:

$$W = W_{sp} \times S_n = 8 \times 137 = 1096 \text{ watts};$$

$$R_n = U^2/W = 2202/1096 = 44 \text{ ohms};$$

$$R_{in} = [R - x (L_{AB} - 2 \times \delta_w]/L_{AC} = 18.21 \text{ ohms};$$

$$K = R_n/R_{in} = 44/18.21 = 2.41.$$

According to the invention, electrically insulated zones may have own resistance magnification factor K for each section of the electrically heated glass surface.

In particular, to ensure uniform heating of the glass surfaces having complex geometric shape: trapezoid, rhombus, parallelogram, cone, etc. it is necessary to apply layouts with electrically insulated zones, calculated for each particular section of the electrically heated surface, i.e. surface resistance $R_n$ in each section of the electrically heated surface should be determined from the condition $R_n = R_{in}/K$, where $R_{in}$ is the surface resistance of the initial section without electrically insulated zones; K is the resistance magnification factor.

According to the invention one or more sections with a specified resistance increased relative to the initial resistance of the electroconductive layer can be formed in the electroconductive (low-emission) layer before forming electrically insulated zones therein.

More specifically, according to the idea of the present invention, at least one section is formed in the electroconductive layer with electrically insulated zones separated by electroconductive strips, which at least partially deviate from the longitudinal direction of the section and consist of straight and/or curved portions having substantially the same width w within the section, the width being selected for given configuration of electrically insulated zones as a function of the desired total resistance $R_{total}$ of the section, consisting of the combination of resistances $R_N$ of said strip portions, wherein the resistance $R_N$ of each strip portion is determined from the equation:

$$R_N = \frac{R_\square \cdot l_N}{w}$$

wherein $R_\square$ is the specific resistivity of the electroconductive layer;
w is the width of the strip, and
$l_N$ is the length of each portion of the strip.

It is assumed that the configuration of electrically insulated zones can be different provided that the electroconductive strips have a constant width in this particular section. However, it should be understood that the more complex the figure forming the electroconductive zone, the more complicated is the calculation of the required resistance and accordingly the more complicated is the adjustment of zone sizes to provide the desired resistance.

Examples of calculations for illustrative embodiments of electrically insulated zones in accordance with the principles of the present invention are presented below.

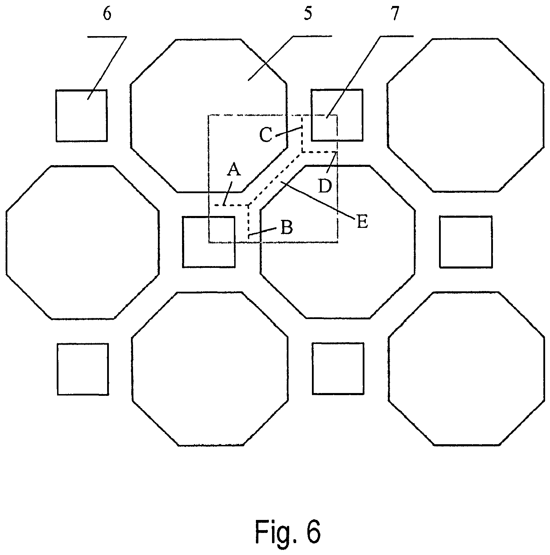

Fig.6 shows an exemplary layout of electrically insulated zones, using a combination of two kinds of regular polygons - octagons 5 and tetragons (squares) 6. The main feature of the method is that the size and position of the used figures are preferably chosen so that upon mutually increasing the sizes of the polygons a continuous layer is ultimately obtained, in which the figures adjoin without separating strips. In this case, radii of circles circumscribing the figures will be maximal.

For convenience of calculation a surface of glass with electrically heated (resistive) layer can be divided into fragments in the shape of elementary rectangles 7 (in this case squares) covering the entire area.

It is known that the resistance of a thin film resist can be calculated from the equation:

$$R = \frac{R_\square \cdot l}{w}$$

where $R_\square$ - specific resistivity of the resistive layer (16-19 ohm/$\square$ for K-glass), 1 - length of the resistor; w - width of the resistor.

Thus, for the elementary square, whose sides are equal, the resistance will be equal to specific resistivity: $R_{el\ sq} = R_\square$.

As seen in Fig.6, each of the squares comprises the following strip portions: A, B, C, D, E.

Determine the total resistance of strips of the square. For the calculation it is assumed that the length of each strip portion corresponds to the length of the strip middle line passing along the adjoining line of the figures, when the figure sizes are increased to maximum such that they adjoin each other.

As is known, length t of sides of a regular octagon is:

$$t = \frac{2r_{min}}{k}$$

where $r_{min}$ - maximum possible radius of the circle inscribed in the regular octagon;

k - constant equal to $1 + \sqrt{2}$ ($\approx 2,41$)

It is also known that the radius $r_{max}$ of the circumscribed circle is:

$$r_{max} = t \cdot \sqrt{\frac{k}{k-1}}$$

Then

$$r_{min} = \frac{kt}{2} = \frac{kr_{max}}{2 \cdot \sqrt{\frac{k}{k-1}}}$$

and side t is:

$$t = \frac{r_{max}}{\sqrt{\frac{k}{k-1}}}$$

From Fig.6 it is clear that length $l_{(A,B,C,D)}$ of each of portions A, B, C, D is equal to t/2, and length $l_E$ of portion E is equal to t. Width w of all portions of the strips is the same.

Surface resistance of each portion of the strip can be determined from the above formula:

$$R_{por} = \frac{R_\square \cdot l}{w}$$

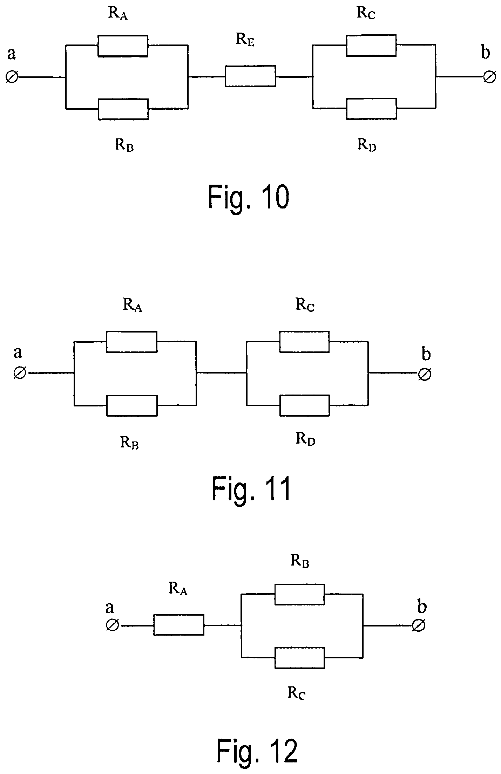

Layout of strips shown in Fig.6 may be represented as a layout of resistances shown in Fig.10.

Resistance $R_{sq}$ is:

$$R_{sq} = \frac{R_A \cdot R_B}{R_A + R_B} + R_E + \frac{R_C \cdot R_D}{R_C + R_D}$$

Since $R_A = R_B = R_C = R_D = R_N$, and $R_E = 2R_N$, where $R_N$ is the resistance of the strip portion having length t/2 equal to $R_N = \frac{R_\square \cdot l_{(A,B,C,D)}}{w}$ w then

$$R_{sq} = \frac{R_N \cdot R_N}{2R_N} + 2R_N + \frac{R_N \cdot R_N}{2R_N} = 3R_N = \frac{3 \cdot R_\square \cdot l_{(A,B,C,D)}}{w}$$

Therefore, the width of any strip portion of the section will be

$$w = \frac{3R_\square \cdot l_{(A,B,C,D)}}{R_{кв}} = \frac{3R_\square \cdot t}{2R_{кв}}.$$

Since $R_{sq}$ is the resistance in the elementary square, which as shown above is a surface portion, in which the resistance is the same as that in every other such square within this section of the electroconductive layer, it can be assumed that $R_{sq} = R_{sec}$ (resistance of section).

$$\text{Consequently} = \frac{3 \cdot 17 \cdot t}{2R_{sec}}.$$

For example, if a layout is selected, in which radius $r_{max}$ of the circumscribed circle of the octagon is 14 mm, then

$$t = \frac{r_{max}}{\sqrt{\frac{k}{k-1}}} = \frac{14}{\sqrt{\frac{2,41}{2,41-1}}} = 10,7\,mm.$$

For the above case, where the total surface resistance of the electroconductive layer consisting of one section, $R_{total} = 93.15$, width w will be:

$$w = \frac{3 \cdot 17 \cdot t}{2 \cdot 93,15} = \frac{3 \cdot 17 \cdot 10,7}{2 \cdot 93,15} = 2,93\,mm$$

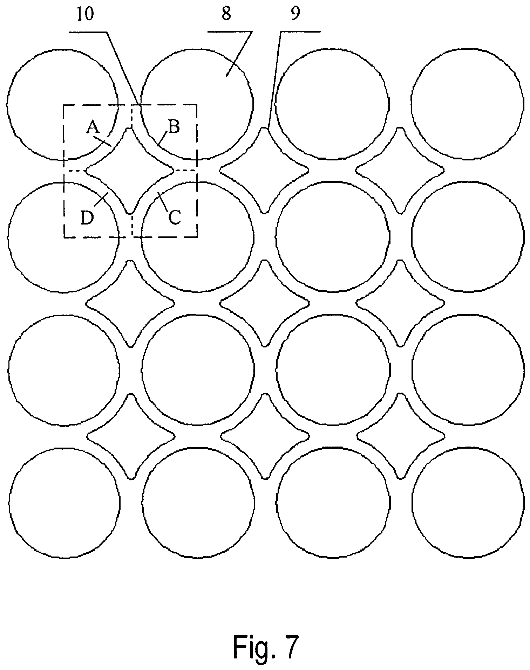

Another exemplary embodiment shown in Fig.7 has a layout, which uses a combination of two other kinds of figures: circles 8 and four-beam stars 9. In this case, shapes and dimensions of the figures are selected so that upon mutually increasing their sizes a solid layer is eventually obtained, in which the figures adjoin without separating strips. However, to avoid the formation of heat release concentration zones, ends of the star-shaped figures are preferably rounded.

For convenience of calculation the glass surface in this case can be also divided into fragments having the shape of elementary squares 10 covering the entire area.

As seen in Fig.7, each of the squares has four strip portions in the shape of arcs A, B, C, D.

Determine the total resistance of strips of the square. For calculation it is assumed that the length of each strip portion corresponds to the length of the strip middle line passing along the adjoining line of the figures, when the dimensions of the figures are increased to maximum such that they adjoin each other, i.e. length $L_{(A,B,C,D)}$ of each strip portion is approximately equal to the length of 45° arc at the maximum radius of the circle:

$$l_{(A,B,C,D)} = 2\pi r_{max}/4 = \pi r_{max}/2.$$

Surface resistance of each strip portion can be also determined from the above formula:

$$R_{por} = \frac{R_\square \cdot l}{w}$$

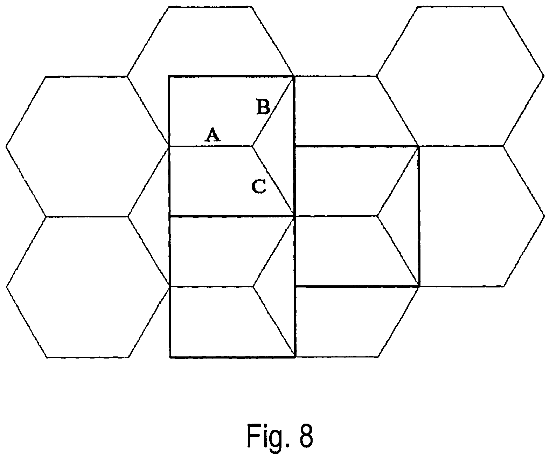

Layout of strips shown in Fig.8 may be represented as a resistance circuit shown in Fig.11.

Resistance $R_{sq}$ is equal to:

$$R_{sq} = \frac{R_A \cdot R_B}{R_A + R_B} + \frac{R_C \cdot R_D}{R_C + R_D}$$

Since $R_A = R_B = R_C = R_D = R_N$, and $R_E = 2R_N$, where $R_N$ is the resistance of section, equal to

$$R_N = \frac{R_\square \cdot l(A,B,C,D)}{w},$$ then

$$R_{sq} = \frac{R_N \cdot R_N}{2R_N} + \frac{R_N \cdot R_N}{2R_N} = R_N = \frac{R_\square \cdot l(A,B,C,D)}{w}$$

Therefore, width of any strip portion of the section will be equal to:

$$w = \frac{R_\square \cdot l(A,B,C,D)}{R_{sq}} = \frac{R_\square \cdot \pi \cdot r_{max}}{2R_{sq}}$$

Since $R_{sq}$ is the resistance in the elementary square, which as shown before is a surface portion, in which the resistance is the same as in every other such square within this section of the electroconductive layer, it can be assumed that $R_{sq} = R_{sec}$ (resistance of section).

$$\text{Consequently} = \frac{17 \cdot \pi r_{max}}{2R_{sec}}.$$

Again, if the layout is selected, in which the maximal radius of the circle-shaped figure $r_{max}$ is 14 mm, then at the total surface resistance of the electroconductive layer consisting of one section $R_{total} = 93.15$, width w will be equal to:

$$\omega = \frac{17 \cdot 3,14 \cdot 14}{2 \cdot 93,15} = 4,01 \ mm$$

Another layout of electrically insulated zones with a honeycomb structure, which is currently considered to be the most preferred, will be described below.

Surface of glass with electrically heated (resistive) layer may be divided into fragments having the shape of elementary rectangles 4 (Fig.8) covering the entire area, wherein each of these fragments has:

$$A = B = C = r_{max}$$

where $r_{max}$ is the radius of the circumscribed circle, i.e. $r_{max}$ is the maximum possible radius of the circle circumscribed around the electrically heated area having the shape of regular hexagon.

1) Calculate the size of the elementary initial rectangle (Fig.8) on X axis:

$$X = r_{max} + \frac{r_{max}}{2} = 1{,}5\, r_{max}$$

2) Calculate the size of the elementary initial rectangle on Y axis: $Y = 2r_{max} \cdot Sin60$
3) Then the resistance of the elementary initial rectangle on axis X is:

$$R_{in.rect} = \frac{R_\square \cdot X}{Y} = \frac{R_\square \cdot 1{,}5 r_{max}}{2 r_{max} \cdot Sin60} = \frac{R_\square \cdot 1{,}5}{2 r_{max} \cdot Sin60}$$

4) Reduce the radius (size of cell). When the cell radius is reduced, width (w) of strips A, B, C is the same (Fig.9). Resistance of strips A, B, C is also the same: $R = R_A = R_B = R_C$.

The layout of strips shown in Fig.9 can be represented as a resistance circuit shown in Fig. 12.
Resistance between a and b is equal to $R_A + R_B$. $R_C/(R_B + R_C) = 1.5R$.
Length (l) of strips A, B, C is assumed equal to the length of the middle line (simplified) and equal to $r_{max}$;

then resistance of one strip is:

$$R_{strip} = \frac{R_\square \cdot l}{w}$$

where $R_\square$ is the specific resistivity of the resistive layer (16-19 ohms/$\square$ for K-glass).

Width w of the strip is equal to:

$$w = (r_{max} \cdot Sin60 - r_{sp} Sin60) = 2 Sin60\,(r_{max} - r_{sp}),$$

where $r_{sp}$ is the specified cell radius (reduced by a certain amount relative $r_{max}$).
Resistance of strip (A, B or C) is equal to:

$$R_{strip} = \frac{R_\square \cdot r_{max}}{2 Sin60\,(r_{max} - r_{min})}$$

Total resistance of the rectangle obtained upon division of cells with size $r_{max}$ is:

$$R_{rect} = \frac{1{,}5 \cdot R_\square \cdot r_{max}}{2 Sin60\,(r_{max} - r_{min})}$$

Then magnification factor K is:

$$K = \frac{R_{rect}}{R_{in\,rect}} = \frac{1{,}5 \cdot R_{\square} \cdot r_{max} \cdot 2Sin60}{2Sin60(r_{max} - r_{min}) \cdot 1{,}5 \cdot R_{\square}} = \frac{r_{max}}{r_{max} - r_{min}}$$

Inverse formula is:

$$r_{sp} = r_{max} - r_{maxn}/K.$$

Alternatively, the formula can be written differently in relation to the total surface of any area:

$$r_{sp} = r_{max} - r_{max} \cdot R_{in}/R_{sp,}$$

where

$R_{sp}$ is the specified resistance of the area, and
$R_{in}$ is the initial resistance of the area without electrically insulated zones.

In accordance with the present invention the regular hexagon shape of electrically insulated zones is just one of the most preferred embodiments thereof, which provides a more convenient way to calculate dimensions of the zones, however those skilled in the art will appreciate that any other shapes of electrically insulated zones are possible, which form a honeycomb structure in the electroconductive layer.

In general, according to the invention electrically insulated zones may be formed by any figures bounded by closed lines, which form e.g. a honeycomb structure. The figures have the same size within a section or sections and are positioned at least along the structure rows having the same direction and the same distance between centers of circles, in each of which the corresponding figure can be placed such that the most distant points of the figure belong to the circle.

It is clear that upon modifying the size of electrically insulated zones the current path length and surface resistance of the electroconductive layer change, so the size of electrically insulated zones should be chosen depending on the shape and size of the glass product. Furthermore, according to the invention electrically insulated zones have own resistance magnification factor K in each section of electrically heated surface of glass.

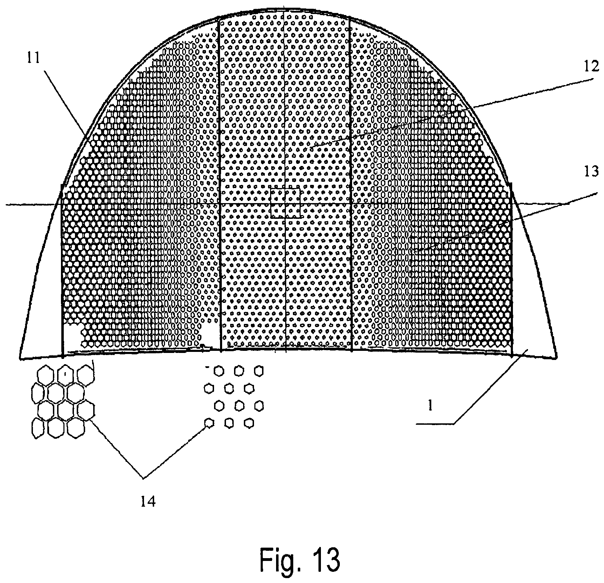

As shown by way of example in Fig.13, electrically heated glass product 1 has three sections 11, 12 and 13, where sections 11 and 13 have a honeycomb structure, which differs from the honeycomb structure 12 only by the size of regular hexagons 14, while the pitch or distance between electrically insulated zones having the shape of regular hexagons 14 remains constant over the entire surface of the glass product 1.

Electrically insulated areas, in which low emissivity coating is to be removed, are preferably calculated by dedicated software in which data is entered in accordance with the kind and layout of the figures. This enables the manufacture of glass products for various purposes: structural optics, automobile, aviation and armor glass, or electrically heated architectural structures.

Those skilled in the art will appreciate that the invention is not limited to the embodiments presented above, and that modifications may be included within the scope of the claims presented below. Distinguishing features presented in the description together with other distinguishing features, as appropriate, may also be used separately from each other.

**Claims**

1.  A method of manufacturing a glass product (1) with electrically heated surface, comprising the steps of:

    producing a substantially transparent substrate (2);
    applying a substantially transparent electroconductive layer (3) to the substrate;
    forming in the electroconductive layer (3) at least two adjacent sections (11, 12, 13) separated therebetween in the longitudinal direction; and
    forming, in each section (11, 12, 13), electrically insulated zones (4) in the form of repeating figures (5, 6, 8, 9) having such configuration, layout and pitch therebetween that are constant for all the electroconductive layer (3), wherein the electrically insulated zones (4) are separated by electroconductive strips extending therebetween, which at least partially deviate from the longitudinal direction, and wherein the electrically insulated zones (4) of each section are so configured that the electroconductive strips have substantially the same width *w* within one section,

**characterized in that**

in said step of forming electrically insulated zones (4), the electroconductive strips in one section are formed with a width $w$ that differs from the width of the electroconductive strips in any other section wherein the glass product has a different geometry, and

to determine the width $w$ of the electroconductive strips in each section, this section is divided into identical fragments in the form of elementary squares (7, 10) wherein the electroconductive strips have the same layout of straight and/or curved portions (A, B, C, D, E) thereof, and then, assuming that resistances of any elementary square should be equal to the desired total resistance $R_{total}$ of this section consisting of the combination of resistances $R_N$ of said electroconductive strip portions, the width $w$ of the electroconductive strips is determined only from the total resistance of the electroconductive strips of the elementary square (7, 10) that is determined taking into account the length and layout of portions (A, B, C, D, E) of the electroconductive strips arranged therein, wherein resistance $R_N$ of each portion of the electroconductive strip is determined from the equation:

$$R_N = \frac{R_\square \cdot l_N}{w}$$

where

$R_N$ is resistance of each strip portion;
$R_\square$ is the specific resistivity of the electroconductive layer;
$w$ is the width of the electroconductive strip, and
$l_N$ is the length of each portion of the electroconductive strip.

2. A method according to claim 1, wherein curvature of the curved portions is varied in accordance with a specified function.

3. A glass product (1) with electrically heated surface, comprising:

a substantially transparent substrate (2); and
a substantially transparent electroconductive layer (3) applied to the substrate (2),
wherein the electroconductive layer (3) is formed with at least two adjacent sections (11, 12, 13) extending in the longitudinal direction, wherein each section has electrically insulated zones (4) in the form of regular hexagons forming a honeycomb structure, having the same dimensions within one section and positioned with the same distance therebetween throughout the electroconductive layer, wherein the electrically insulated zones (4) in each section are separated by electroconductive strips having substantially the same width $w$ within one section,
**characterized in that**
the electrically insulated zones (4) in one section are so formed that the electroconductive strips in one section have a width $w$ that differs from the width of the electroconductive strips in any other section wherein the glass product has a different geometry, and, correspondingly, the regular hexagons of said one section have a specified radius of circles circumscribed around them that differs from the specified radius of circumscribed circles in said other section wherein the glass product has a different geometry, wherein said specified radius $r_{sp}$ of the circumscribed circles within each section is calculated by the formula:

$$r_{sp} = r_{max} - r_{max} \cdot R_{in}/R_{n,}$$

where

$r_{max}$ is the maximum radius of the circumscribed circle in each section for the basic honeycomb structure with adjoining regular hexagons;
$R_n$ is the specified surface resistance of each section, and
$R_{in}$ is the surface resistance of each section for the basic honeycomb structure with adjoining regular hexagons.

4. A glass product according to claim 3, wherein bus bars are formed along edges of the glass product at a distance from each other.

5. A glass product according to claim 3, wherein said electrically insulated zones comprise an electroconductive layer inside them.

**Patentansprüche**

1. Verfahren zum Herstellen eines Glasproduktes (1) mit elektrisch erwärmter Oberfläche, das die folgenden Schritte umfasst:

   Erzeugen eines im Wesentlichen transparenten Substrats (2);
   Auftragen einer im Wesentlichen transparenten elektrisch leitfähigen Schicht (3) auf das Substrat;
   in der elektrisch leitfähigen Schicht (3), Bilden von mindestens zwei benachbarten Abschnitten (11, 12, 13), die in der Längsrichtung getrennt sind; und
   in jedem Abschnitt (11, 12, 13), Bilden von elektrisch isolierten Zonen (4) in der Form von sich wiederholenden Figuren (5, 6, 8, 9), die einen solchen Aufbau, Layout und Platz dazwischen haben, der konstant für die ganze elektrisch leitfähige Schicht (3) ist, wobei die elektrisch isolierten Zonen (4) durch elektrisch leitfähige Streifen getrennt sind, die sich dazwischen erstrecken, welche zumindest teilweise von der Längsrichtung abweichen, und wobei die elektrisch isolierten Zonen (4) von jedem Abschnitt so aufgebaut sind, dass die elektrisch leitfähigen Streifen im Wesentlichen dieselbe Breite $w$ innerhalb eines Abschnitts haben,
   **dadurch gekennzeichnet, dass**
   in dem Schritt des Bildens von elektrisch isolierten Zonen (4) die elektrisch leitfähigen Streifen in einem Abschnitt mit einer Breite $w$ gebildet werden, die sich von der Breite der elektrisch leitfähigen Streifen in einem anderen Abschnitt unterscheidet, wobei das Glasprodukt eine unterschiedliche Geometrie hat, und um die Breite $w$ der elektrisch leitfähigen Streifen in jedem Abschnitt zu bestimmen, wird dieser Abschnitt in identische Fragmente in Form von einfachen Quadraten (7, 10) aufgeteilt, wobei die elektrisch leitfähigen Streifen dieselbe Gestaltung von geraden und/oder gekrümmten Teilen (A, B, C, D, E) derselben haben, und dann, unter der Annahme, dass die Widerstände jedes einfachen Quadrates gleich dem gewünschten Gesamtwiderstand $R_{total}$ dieses Abschnitts sein sollte, der aus der Kombination von Widerständen $R_N$ der elektrisch leitfähigen Streifenteile besteht, wird die Breite $w$ der elektrisch leitfähigen Streifen nur aus dem Gesamtwiderstand der elektrisch leitfähigen Streifen des einfachen Quadrates (7, 10) bestimmt, der unter Berücksichtigung der Länge und der Gestalt der Teile (A, B, C, D, E) der elektrisch leitfähigen Streifen bestimmt wird, die darin angeordnet sind, wobei der Widerstand $R_N$ jedes Teils des elektrisch leitfähigen Streifens aus der folgenden Gleichung bestimmt wird:

$$R_N = \frac{R_\square \cdot l_N}{w}$$

   wobei

   $R_N$ der Widerstand jedes Streifenteils ist;
   $R_{[]}$ der spezifische Widerstand der elektrisch leitfähigen Schicht ist;
   $w$ die Breite des elektrisch leitfähigen Streifens ist, und
   $l_N$ ist die Länge jedes Teils des elektrisch leitfähigen Streifens.

2. Verfahren nach Anspruch 1, wobei die Krümmung der gekrümmten Teile gemäß einer festgelegten Funktion variiert.

3. Glasprodukt (1) mit einer elektrisch erwärmten Oberfläche, umfassend:

   ein im Wesentlichen transparentes Substrat (2); und eine im Wesentlichen transparente elektrisch leitfähige Schicht (3), die auf das Substrat (2) aufgetragen wird,
   wobei die elektrisch leitfähige Schicht (3) mit mindestens zwei benachbarten Abschnitten (11, 12, 13) gebildet wird, die sich in Längsrichtung erstrecken, wobei jeder Abschnitt elektrisch isolierte Zonen (4) in Form von regelmäßigen Sechsecken hat, die eine Wabenstruktur bilden, welche dieselben Dimensionen innerhalb eines Abschnitts hat und mit demselben Abstand dazwischen über die gesamte elektrisch leitfähige Schicht positioniert ist, wobei die elektrisch isolierten Zonen (4) in jedem Abschnitt durch elektrisch leitfähige Streifen getrennt werden, die im Wesen dieselbe Breite $w$ innerhalb eines Abschnitts haben,
   **dadurch gekennzeichnet, dass**

die elektrisch isolierten Zonen (4) in einem Abschnitt so gebildet sind, dass die elektrisch leitfähigen Streifen in einem Abschnitt eine Breite w haben, die sich von der Breite der elektrisch leitfähigen Streifen in jedem anderen Abschnitt unterscheidet, wobei das Glasprodukt eine unterschiedliche Geometrie hat, und dementsprechend haben die regelmäßigen Sechsecke eines Abschnitts einen festgelegten Radius von Kreisen, die um sie umschrieben sind, die sich von dem festgelegten Radius von umschriebenen Kreisen in einem anderen Abschnitt unterscheiden, wobei das Glasprodukt eine unterschiedliche Geometrie hat, wobei der festgelegte Radius $r_{sp}$ der umschriebenen Kreise innerhalb jedes Abschnitts durch die folgende Formel berechnet wird:

$$r_{sp} = r_{max} - r_{max}\, Ri_n/R_n,$$

wobei

$r_{max}$ der maximale Radius des umschriebenen Kreises in jedem Abschnitt für die grundlegende Wabenstruktur mit angrenzenden regelmäßigen Sechsecken ist;
$R_n$ der festgelegte Oberflächenwiderstand jedes Abschnitts ist, und
$R_{in}$ der Oberflächenwiderstand jedes Abschnitts für die grundlegende Wabenstruktur mit angrenzenden regelmäßigen Sechsecken ist.

4. Glasprodukt nach Anspruch 3, wobei Sammelschienen entlang der Kanten des Glasproduktes in einem Abstand voneinander gebildet sind.

5. Glasprodukt nach Anspruch 3, wobei die elektrisch isolierten Zonen eine elektrisch leitfähige Schicht innerhalb derselben umfassen.


**Revendications**

1. Procédé de fabrication d'un produit de verre (1) muni d'une surface chauffée de manière électrique, comprenant les étapes consistant à :

produire un substrat essentiellement transparent (2) ;
appliquer une couche électro-conductrice essentiellement transparente (3) sur le substrat ;
former dans la couche électro-conductrice (3) au moins deux sections adjacentes (11, 12, 13) séparées entre elles dans la direction longitudinale ; et
former, dans chaque section (11, 12, 13), des zones électriquement isolées (4) de la forme de figures se répétant (5, 6, 8, 9) présentant une telle configuration, une telle mise en page et un tel niveau entre elles qui sont constants pour toute la couche électro-conductrice (3), dans lequel les zones électriquement isolées (4) sont séparées par des bandes électro-conductrices s'étendant entre elles, qui au moins dévient partiellement de la direction longitudinale, et dans lequel les zones électriquement isolées (4) de chaque section sont conçues de telle sorte que les bandes électro-conductrices possèdent essentiellement la même largeur w au sein d'une section, **caractérisé en ce que**
dans ladite étape de formation des zones électriquement isolées (4), les bandes électro-conductrices dans une section sont formées avec une largeur w qui est différente de la largeur des bandes électro-conductrices de tout autre section dans laquelle le produit de verre possède une géométrie différente, et
pour déterminer la largeur w des bandes électro-conductrices dans chaque section, cette section est divisée en des fragments identiques de la forme de carrés élémentaires (7, 10) dans lesquels les bandes électro-conductrices possèdent la même mise en page des portions linéaires et/ou courbes (A, B, C, D, E) de ceux-ci, et ensuite, assumer que les résistances de n'importe quel carré élémentaire devait être égale à la résistance totale souhaitée $R_{total}$ de cette section constituée de la combinaison des résistances $R_N$ desdites portions de bandes électro-conductrices, la largeur w des bandes électro-conductrices est déterminée seulement à partir de la résistance totale des bandes électro-conductrices du carré élémentaire (7, 10) qui est déterminée en prenant en compte la longueur et la mise en page de portions (A, B, C, D, E) des bandes électro-conductrices agencées dans celui-ci, dans lequel une résistance $R_N$ de chaque portion de la bande électro-conductrice est déterminée à partir de l'équation :

$$R_N = \frac{R_\square \cdot l_N}{w}$$

où

R_N représente la résistance de chaque portion de bande ;
R_0 représente la résistivité spécifique de la couche électro-conductrice ;
w représente la largeur de la bande électro-conductrice, et
L_N représente la longueur de chaque portion de la bande électro-conductrice.

2.  Procédé selon la revendication 1, dans lequel une courbure des portions courbes varie en accord avec une fonction spécifiée.

3.  Produit de verre (1) munie d'une surface chauffée de manière électrique, comprenant :

un substrat essentiellement transparent (2) ;
une couche électro-conductrice essentiellement transparente (3) appliquée sur le substrat,
dans lequel la couche électro-conductrice (3) est formée d'au moins deux sections adjacentes (11, 12, 13) s'étendant dans la direction longitudinale, dans lequel chaque section présente des zones électriquement isolées (4) de la forme d'hexagones réguliers formant une structure alvéolaire, ayant les mêmes dimensions au sein d'une section et positionnés à la même distance entre eux au travers de la couche électro-conductrice, dans lequel les zones électriquement isolées (4) dans chaque section sont séparées par des bandes électro-conductrices présentant essentiellement la même largeur w au sein d'une section,
**caractérisé en ce que**
les zones électriquement isolées (4) dans une section sont formées de telle sorte que les bandes électro-conductrices dans une section possèdent une largeur w différente de la largeur des bandes électro-conductrices de n'importe quelle autre section dans laquelle le produit de verre présente une géométrie différente, et, de manière correspondante, les hexagones réguliers de ladite une section possèdent un rayon spécifié de cercles circonscrits autour de ceux-ci qui est différent du rayon spécifié de cercles circonscrits dans ladite autre section dans laquelle le produit de verre présente une géométrie différente, dans lequel ledit rayon spécifié r_sp des cercles circonscrits au sein de chaque section est calculé par la formule :

$$r_{sp} = r_{max} - r_{max} \cdot R_{in}/R_n,$$

où

r_max représente le rayon maximum du cercle circonscrit dans chaque section pour la structure alvéolaire basique munie d'hexagones réguliers contigus ;
R_n représente la résistance de surface spécifiée de chaque section, et
R_in représente la résistance de surface de chaque section pour la structure alvéolaire basique munie d'hexagones réguliers contigus.

4.  Produit de verre selon la revendication 3, dans lequel des barres omnibus sont formées le long de bord du produit de verre à une certaine distance l'une de l'autre.

5.  Produit de verre selon la revendication 3, dans lequel lesdites zones électriquement isolées comprennent une couche électro-conductrice à l'intérieur de celles-ci.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1051777 A
- EA 201000722 A1
- EP 2381739 A2
- GB 2091528 A